# EUROPÄISCHE PATENTANMELDUNG

(11) **EP 3 460 809 A1**
(43) Veröffentlichungstag der Anmeldung: **27.03.2019**
(21) Anmeldenummer: 17192062.2
(22) Anmeldetag: 20.09.2017
(51) Int. Cl.: H01B 3/40, H02K 3/40, C08K 3/013, C08K 3/016, C08K 3/36

(54) **ELEKTRISCHES ISOLATIONSMATERIAL UND/ODER IMPRÄGNIERHARZ FÜR DIE WICKELBANDISOLIERUNG EINER MITTEL- UND/ODER HOCHSPANNUNGSMASCHINE, ISOLATIONSSTOFF SOWIE ISOLATIONSSYSTEM DARAUS**

(71) Anmelder: Siemens Aktiengesellschaft, 80333 München (DE)
(72) Erfinder: Huber, Jürgen, 91058 Erlangen (DE); Lang, Steffen, 91352 Hallerndorf (DE); Müller, Niels, 90425 Nürnberg (DE); Nagel, Michael, 91350 Gremsdorf (DE); Übler, Matthias, 92289 Ursensollen (DE)

(57) **Zusammenfassung**

Die Erfindung betrifft ein elektrisches Isolationsmaterial und/oder Imprägnierharz für die Wickelbandisolierung, den daraus durch Härtung gebildeten Isolationsstoff sowie ein Isolationssystem, beispielsweise ein Isolationssystem für eine rotierende elektrische Maschine, insbesondere eine Mittel- oder Hochspannungsmaschine. Durch die Erfindung wird erstmals ein Isolationsmaterial, also eine Zusammensetzung für eine härtbare Mischung, die einen Isolationsstoff bildet, gegeben, bei dem im Betrieb unter gleichen Bedingungen die Lebensdauer der herkömmlichen Systeme um bis zu das 8-fache übertroffen wird. Dies wird auf die symbiotische Kombination von Substitution des herkömmlichen Epoxidharzes zumindest teilweise durch SiR₂-O-Rückgrat bildende Komponenten zusammen mit anorganischen Nanopartikeln und einem Sinteradditiv, das die Verschmelzung der Nanopartikel in dem Basisharz bewirkt, zurückgeführt.

## Beschreibung

Die Erfindung betrifft ein elektrisches Isolationsmaterial und/oder Imprägnierharz für die Wickelbandisolierung, den daraus durch Härtung gebildeten Isolationsstoff sowie ein Isolationssystem, beispielsweise ein Isolationssystem für eine rotierende elektrische Maschine, insbesondere eine Mittel- oder Hochspannungsmaschine.

Im Betrieb von Hochspannungsmaschinen mit Leistungen von über 500 MVA können Bemessungsspannungen von über 10 kV erreicht werden. Die Komponenten sind entsprechend hohen mechanischen, thermischen und elektrischen Belastungen ausgesetzt. Die Zuverlässigkeit des Isolationssystems der elektrischen Leiter ist daher maßgeblich für die Betriebssicherheit verantwortlich.

Ein Isolationssystem hat die Aufgabe elektrische Leiter, wie Drähte, Spulen und Wicklungsstäbe, dauerhaft gegeneinander und gegen das Blechpaket des Ständers oder die Umgebung zu isolieren. Dazu weist das Isolationssystem eine Isolierung zwischen Teilleitern (Teilleiterisolierung), zwischen den Leitern oder Wicklungsstäben (Leiter- oder Wicklungsisolierung) und zwischen den Leitern und dem Massenpotential im Nut- und Wicklungskopfbereich (Hauptisolierung) auf.

Das grundlegende Problem bei derart elektrisch belasteten Isolationen liegt in der teilentladungsinduzierten Erosion mit sich ausbildenden "Teering"-Kanälen, die letztlich zum elektrischen Durchschlag der Isolation führen. Üblicherweise kommen zur dauerhaften Isolation der spannungsführenden Leiter in rotierenden Maschinen glimmerbasierte Isolierungen zum Einsatz.

Zum Ausbilden der Hauptisolation werden die aus isolierten Teilleitern hergestellten Formspulen mit Glimmerbändern umwickelt und im Rahmen einer Vakuum-Druck-Imprägnierung (Vacuum-Pressure-Impregnation, VPI-Prozess) mit einem Harz imprägniert. Dabei werden Glimmerbänder in Form von Glimmerpapier eingesetzt.

Durch die Imprägnierung werden die im Glimmerpapier zwischen den einzelnen Partikeln und/oder Bandfalten befindliche Hohlräume mit dem Isolationsmaterial gefüllt. Der Verbund aus Imprägnierharz und Glimmerpapier wird gehärtet, bildet den Isolationsstoff, der dann zum Isolationssystem verarbeitet wird und die mechanische Festigkeit des Isolationssystems liefert. Die elektrische Festigkeit ergibt sich aus der Vielzahl der Feststoff-Feststoff-Grenzflächen des Glimmers. Durch den VPI-Prozess müssen daher auch kleinste Hohlräume in der Isolierung mit Harz ausgefüllt werden, um die Anzahl innerer Gas-Feststoff-Grenzflächen zu minimieren.

Insgesamt stellt dies allerhöchste elektrische, thermische und mechanische Anforderungen an die Isolation der Leiter einer Wicklung untereinander, der Wicklung gegen das Blechpaket sowie auch der am Austritt der Leiter aus dem Blechpaket gebildeten Gleitanordnung. In der Maschinenisolierung unterscheidet man die Innenpotentialsteuerung IPS zwischen dem Kupferleiterverband und der Hochspannungsisolierung, den Außenglimmschutz (AGS), zwischen der Wicklung und dem Blechpaket, sowie den Endenglimmschutz (EGS) am Austritt der Wicklungsstäbe aus dem Blechpaket.

Bisher werden als Basisharze für elektrische Isolationen und insbesondere auch als Tränkharze für Wickelbandisolierungen bevorzugt Epoxidharze auf Kohlenstoffbasis eingesetzt, die in flüssiger Form an einem Kohlenstoff-basierten (-CR₂-)ₙ- Rückgrat alle möglichen funktionellen Gruppen, beispielsweise auch Epoxidgruppen tragen. Diese werden mit Härter zu einem duroplastischen Kunststoff umgesetzt, der einen Verguss und/oder beispielsweise die Imprägnierung der Wickelbandisolierung bildet.

Wie aus der DE 10 2014 219765 bekannt, wird durch den Einsatz von Nanopartikel bereits versucht, durch den Einsatz organischer und anorganischer Nanopartikel Sinterbrücken in den Basisharzen auszubilden, die erosionsinhibierend wirken.

Trotzdem besteht weiterhin der Bedarf, durch verbesserte Ausbildung von Sinterbrücken innerhalb des Basisharzes Schutzschichten innerhalb des Basisharzes zu bilden, die verbesserte erosionsinhibierende Wirkung zeigen.

Deshalb ist es Aufgabe der vorliegenden Erfindung, Additive für Isolationsmaterialien zur Verfügung zu stellen, die bei elektrischen Teilentladungen durch Ausbildung einer Barriereschicht die Erosionsbeständigkeit und damit die Teilentladungsresistenz eines aus dem Isolationsmaterial hergestellten Isolationssystems erhöhen.

Diese Aufgabe wird durch den Gegenstand der vorliegenden Erfindung, wie er in der Beschreibung und den Ansprüchen offenbart ist, gelöst.

Dementsprechend ist Gegenstand der vorliegenden Erfindung ein Isolationsmaterial und/oder Imprägnierharz für eine Wickelbandisolierung, zumindest ein Basisharz, einen Härter, zumindest eine nanopartikuläre Füllstofffraktion und Additive umfassend, wobei das Basisharz in polymerem Zustand zumindest zum Teil mit einem -SiR₂-O-Rückgrat vorliegt und zumindest ein Additiv vorgesehen ist, durch das bei elektrischen Teilentladungen eine zumindest teilweise Versinterung der Nanopartikel zu einer Barriereschicht erfolgt. Außerdem ist Gegenstand der vorliegenden Erfindung ein Isolationsstoff, erhältlich durch Härtung des vorliegend beschriebenen Isolationsmaterials sowie eine aus dem Isolationsstoff gebildetes Isolationssystem.

Überraschend hat sich gezeigt, dass durch die Kombination eines Basisharzes, das zumindest zum Teil -SiR₂-O-Rückgrat aufweist, mit einem Additiv, insbesondere einem Sinteradditiv, das zu einer Verglasung der Nanopartikel im Basisharz führt, eine deutliche Erhöhung der elektrischen Lebensdauer des Isolationsstoffes erreicht wird. Es wird davon ausgegangen, dass die Aufweitung des Rückgrats durch den Einbau der (SiR₂ - O)-Gruppe in der Harzmatrix eine verbesserte Katalyse der Sinteradditive zur schnelleren Ausbildung eines verglasten Bereichs zwischen den Nanopartikel bewirkt.

Deshalb umfasst das Isolationsmaterial mindestens ein Sinteradditiv ausgewählt aus der Gruppe bestehend aus Magnesiumoxid (MgO), Calciumcarbonat (CaO₃), Stickstoffverbindungen, organische Phosphorverbindungen, Aluminiumnitrid (AlN), Siliziumcarbid (SiC), Titannitrid (TiN), Yttriumoxid (Y₂O₃), Yttrium-Aluminium-Granat (Al₃Y₅O₁₂) , Neodymoxid (Nd₂O₃), Ceroxid (CeO₂). Bevorzugte Sinteradditive sind Stickstoffverbindungen, organische Phosphorverbindungen, MgO, CaO₃ und/oder Mischungen der vorgenannten Komponenten.

Stickstoff basierte Sinteradditive umfassen zum Beispiel Melanin (Cyanursäuretriamid), wie Melaninphosphat (MPP), und Harnstoff (Carbonyldiamid).

Organische Phosphor basierte Sinteradditive enthalten mindestens eine Verbindung ausgewählt aus der Gruppe bestehend aus Diphenylkresylphosphat (CDP), Diphenyloctylphosphat (DPO), Tri-n-butylphosphat (TBP), Triethylphosphat (TEP), Tri-p-kresylphosphat (TCP), Triphenylphosphat (TPP), Isopropyliertes Triphenylphosphat (ITP), Resorcinol-bis(diphenylphosphat) (RDP), Bisphenol-A-bis (diphenylphosphat) (BDP), Tris(butoxylethyl)phosphat (TBEP), Tris(chlorethyl)phosphat (TCEP), Tris(chlorpropyl)phosphat (TCPP), Tris(dichlorisopropyl)phosphat (TDCP), Tris-(2-ethylhexyl)phosphat (TEHP), 9,10-Dihydro-9-oxa-10-phosphaphenanthren-10-oxid (DOPO).

In einer weiteren Ausführungsform liegen die Additive wie Sinteradditive und/oder Flammschutzmittel in durchschnittlichen Partikelgrößen im Bereich von 1 nm bis 50 nm, bevorzugt 1 nm bis 5 nm und insbesondere bevorzugt 1 nm bis 3 nm, vor oder liegen molekulardispers gelöst mit Partikelgrößen von weniger als 1 nm vor.

Vorteilhafterweise sind bezüglich des Nanopartikelanteils 0,1 bis 50 Gew.-%, bevorzugt 1 bis 47 Gew%, insbesondere bevorzugt von 10 bis 40 Gew% des Sinteradditives und/oder eines Flammschutzmittels in dem Isolationsmaterial enthalten. Durch einen hohen Anteil des Sinteradditives und/oder Flammschutzmittels wird die Ausbildung von Sinterbrücken soweit beschleunigt, dass auch bei geringen Mengen an Nanopartikeln eine verbesserte elektrische Festigkeit erreicht werden kann.

Neueste elektrische Auslagerungen, also Tests, in denen das gehärtete Isolationsmaterial, der so genannte Isolierstoff, zu Prüfzwecken Betriebsbedingungen ausgesetzt ist, zeigen durch die vorgenannte Kombination aus Basisharz mit Siloxananteil und Sinteradditiv eine Lebensdauererhöhung bis zu Werten, die um den Faktor 8 höher als die entsprechenden gemessenen Werte aus einem Isolierstoff aus dem reinen Epoxidharz ohne Siloxan und ohne Sinteradditiv.

Vorteilhafterweise umfasst das Basisharz des Isolationsmaterials eine härtbare Verbindung, die zu mehr als 50 Mol%, insbesondere zu mehr als 75 Mol% einer herkömmlich eingesetzten härtbaren Verbindung entspricht, wie einem Epoxidharz, beispielsweise Bisphenol-F-Diglycidylether (BFDGE) und/oder Bisphenol-A-Diglycidylether (BADGE), Polyurethan und/oder Mischungen hieraus. Bevorzugt sind Epoxidharze basierend auf Bisphenol-F-Diglycidylether (BFDGE), Bisphenol-A-Diglycidylether (BADGE) und/oder Mischungen hieraus.

Die verbleibenden Mol% der härtbaren Verbindung, die beispielsweise im Isolationsmaterial monomer oder oligomer vorliegt, sind als funktionalisierte (-SiR₂-O-) Gruppen umfassende Verbindungen vorgesehen. Dabei kann es sich beispielsweise um eine glycidyl- und/oder glycidoxy-funktionalisierte Siloxan-Verbindung, um ein epoxyterminiertes Aryl- und/oder Alkyl-Siloxan, um ein 1,3-Bis(3-glycidyloxyalkyl-tetramethyl-disiloxan, sowie beliebige Mischungen daraus, handeln. Die Reste R stehen dabei für alle Arten organischer Reste, die sich zur Härtung und/oder Vernetzung zu einem für das Isolationssystem brauchbaren Isolationsstoff eignen. Insbesondere ist R gleich oder ungleich und steht für

R = -Aryl, -Alkyl, -Heterocyclen, Stickstoff, Sauerstoff und/oder Schwefel substituierte Aryle und/oder Alkyle.

Insbesondere kann R für folgende Gruppen stehen:
- Alkyl, beispielsweise -Methyl, -Propyl, -isoPropyl, - Butyl, -isoButyl, -tertButyl, -Pentyl, -isoPentyl, - Cyclopentyl sowie alle weiteren Analoge bis zu Dodecyl, also das Homologe mit 12 C-Atomen;
- Aryl, beispielsweise: Benzyl-, Benzoyl-, Biphenyl-, Toluyl-, Xylole etc., insbesondere beispielsweise alle Arylreste, deren Aufbau der Definition von Hückel für die Aromatizität entspricht
- Heterozyklen: insbesondere schwefelhaltige Heterozyklen wie Thiophen, Tetrahydrothiophen, 1,4-Thioxan und Homologe und/oder Derivate davon,
- Sauerstoffhaltige Heterozyklen wie z.B. Dioxane
- Stickstoffhaltige Heterozyklen wie z.B. -CN, -CNO,-CNS, - N3 (Azid) etc.
- Schwefel substituierte Aryle und/oder Alkyle: z.B. Thiophen, aber auch Thiole.

Die Hückel-Regel für aromatische Verbindungen bezieht sich auf den Zusammenhang, dass planare, cyclisch durchkonjugierte Moleküle, die eine Anzahl von Π-Elektronen, die sich in Form von 4n + 2 darstellen lässt, umfasst, eine besondere Stabilität besitzen, die auch als Aromatizität bezeichnet wird.

Zum Härten wird dem Matrixmaterial ein herkömmlicher Härter zugegeben. Als Härter eignen sich Säureanhydride, wie Methyltetrahydrophthalsäureanhydrid oder Methylhexahydrophthalsäureanhydrid, aromatische Amine, aliphatische Amine und Mischungen hieraus. Bevorzugte sind Säureanhydride auf Basis von Methyltetrahydrophthalsäureanhydrid, Methylhexahydrophhthalsäureanhydrid oder Mischungen hieraus. Deren Toxikologie ist jedoch mittlerweile nicht mehr ganz unumstritten.

Als Härter eignen sich daneben auch kationische und anionische Härtungskatalysatoren, wie beispielsweise organische Salze, wie organische Ammonium-, Sulphonium-, Iodonium-, Phosphonium- und/oder Imidazolium-salze und Amine, wie tertiäre Amine, Pyrazole und/oder Imidazol-Verbindungen. Beispielhaft genannt sei hier 4,5-Dihydroxymethyl-2-phenylimidazol und/oder 2-Phenyl-4-methyl-5-hydroxymethylimidazol. Es können aber auch oxirangruppenhaltige Verbindungen, wie beispielsweise Glycidylether als Härter eingesetzt werden. Schließlich ist gemäß der Erfindung auch vorgesehen, dass ein Teil des im Isolationsmaterial vorliegenden Härters ebenfalls eine Verbindung ist, die nach erfolgter Härtung im Matrixharz als funktionalisierte Verbindung mit SiR₂-O- Rückgrat vorliegt. Entsprechend können alle Monomere und Oligomere, die im Isolationsmaterial zur Substitution des Kohlenstoff-basierten Basisharzes vorgesehen sind, auch als Härter eingesetzt werden. Dabei können Gemische aus verschiedenen Härtern vorgesehen sein.

Nach einer vorteilhaften Ausführungsform der Erfindung liegt im Isolationsmaterial zusätzlich ein Flammschutzmittel vor. Es können anorganische und organische Flammschutzmittel eingesetzt werden.

Anorganische Flammschutzmittel enthalten beispielsweise anorganische Phosphorverbindungen, wie Roter Phosphor, Ammoniumphosphat ((NH₄) ₃PO₄) oder Ammoniumpolyphosphat (APP), Metalloxidverbindungen, insbesondere Antimon-Verbindungen, wie Antimontrioxid (Sb₂O₃) oder Antimonpentroxid (Sb₂O₅), Metallhydroxidverbindungen, wie Aluminiumtrihydroxid (Al(OH)₃), Magnesiumhydroxid (Mg(OH)₂) oder Calciumhydroxid (Ca(OH)₂), Metallsalzverbindungen, wie Ammoniumsulfat ((NH₄)₂SO₄), oder Mischungen hieraus.

Weiterhin können anorganische Flammschutzmittel Borverbindungen, wie Zinkborat oder Natriumborat, Siliziumverbindungen, wie Polysilazane, oder Graphit enthalten.

Bevorzugte Flammschutzmittel sind Flammschutzmittel auf Basis von organischen oder anorganischen Phosphorverbindungen, insbesondere auf Basis von Ammonium-Verbindungen, wie Ammoniumpolyphosphat (APP).

In einer weiteren Ausführungsform enthält die Zusammensetzung organische Flammschutzmittel, anorganische Flammschutzmittel oder Mischungen hieraus. Organische Flammschutzmittel umfassen beispielsweise halogenierte Verbindungen, insbesondere bromierte und/oder chlorierte Verbindungen, Stickstoffverbindungen, organische Phosphorverbindungen sowie Mischungen hieraus.

Bromierte Flammschutzmittel enthalten mindestens eine Verbindung ausgewählt aus der Gruppe bestehend aus polybromierte Biphenyle (PBB), polybromierte Diphenylether (PBDE), wie PentaBDE, OctaBDE und DecaBDE, Tetrabrombisphenol A (TBBPA), bromiertes Polystyrol, wie Bromstyrol oder Dibromstyrol, 2,4,6-Tribromphenoxypropen-2 (TBPP) und Hexabromcyclododecan (HBCD). Chlorierte Flammschutzmittel umfassen zum Beispiel Chlorparaffine oder Mirex.

Weiterhin kann dem Matrixmaterial ein Beschleuniger zugegeben werden. Geeignete Beschleuniger sind zum Beispiel Naphthenate, tertiäre Amine oder Mischungen hieraus.

Das Isolationsmaterial ist so konzipiert, dass sich nach erfolgter Härtung zum Isolationsstoff und Herstellung des Isolationssystems durch Wärmezufuhr Sinterbrücken zwischen den Nanopartikeln ausbilden. Die Sinterbrücken werden somit durch Wärme ausgebildet, die während des Betriebes der Mittel- oder Hochspannungsmaschine entsteht.

Die Nanopartikel weisen bevorzugt eine sphärische oder plättchenförmige Form auf. Sphärische Nanopartikel unterscheiden sich in ihrer Ausdehnung nur unwesentlich in den drei Raumrichtungen, während plättchenförmige Nanopartikel ein hohes Aspektverhältnis aufweisen.

Die Verarbeitbarkeit von Isolationsmaterial, das mit sphärischen Nanopartikel gefüllt ist, ist besser als die Verarbeitbarkeit von Isolationsmaterial das mit plättchenförmigen Nanopartikeln gefüllt ist.

Die Nanopartikel sind im Isolationsmaterial bevorzugt in einer Menge von 0,1 bis 50 Vol%, insbesondere 1 bis 45 Vol% und besonders bevorzugt im Bereich von 3 bis 40 Vol% enthalten. Vorteilhafterweise liegen die Nanopartikel in einer inkohärenten Verteilung in dem Matrixmaterial vor. Das heißt die Nanopartikel sind homogen dispers gelöst und berühren sich nicht.

In einer weiteren Ausführungsform liegen die Nanopartikel in monomodaler, bimodaler oder multimodaler Größenverteilung vor. Beispielsweise können die Nanopartikel einen mittleren Durchmesser D₅₀ von 0,1 bis 50 nm, bevorzugt von 1 bis 25 nm, besonders bevorzugt von 5 bis 20 nm und ganz besonders bevorzugt von 8 bis 17 nm aufweisen. Damit ergibt sich eine spezifische Oberfläche der Nanopartikel von mindestens 50 m²/g. Mit abnehmendem Durchmesser und zunehmender spezifischer Oberfläche der Nanopartikel, steigt deren Reaktivität und Startviskosität. Damit steigt auch das Bestreben die Oberflächenenergie zu minimieren und lokal durch Sinterbrückenbildung zu verschmelzen.

In einer weiteren Ausführungsform umfassen die Nanopartikel organische und anorganische Bestandteile, sowie Metalloxide, Halbmetalloxide oder Mischungen hieraus. Beispielsweise können die Nanopartikel Siliziumoxid (SiO₂), Aluminiumoxid (Al₂O₃), Titandioxid (TiO₂), und Mischungen hieraus enthalten.

Nach einer vorteilhaften Ausführungsform liegen die Nanopartikel in Form von Nano-Glaskügelchen, die entweder massiv oder hohl sind, vor.

Das Isolationssystem kann insbesondere als Hauptisolation auf dem Wicklungsstab der Hochspannungsmaschine ausgestaltet sein. Dabei ist der Wicklungsstab mit einem Isolationsband umwickelt, auf das die vorstehend beschriebene Zusammensetzung aufgebracht ist. Das Isolationsband kann ein Trägergewebe, beispielsweise ein Polyester- oder ein Glasgewebe, umfassen, auf dem der Glimmerpartikel vorgesehen sind. Die Zusammensetzung dient dabei zur Imprägnierung des Isolationsbandes. Je nach Reaktivität des oder der Sinteradditive können die Sinteradditive bei der Härtung des Isolationsmaterials zum Isolationsstoff entweder als Teil der flüssigen und verarbeitbaren Formulierung aus monomerem oder oligomerem Basisharz mit Siloxananteil und Härter und/oder als Teil des Glimmerbandes vorliegen. In Letztgenanntem Fall kann das oder die Sinteradditiv€ beispielsweise im Glimmerband, das Poren aufweist, deponiert sein und kommt mit dem Basisharz und dem Härter erst unmittelbar vor der Härtung in Berührung.

Das sind Probleme der Lagerstabilität und können nicht verallgemeinert werden, da es unter anderem auf geringe Unterschiede in der Reaktivität, ausgelöst durch funktionelle Gruppen am Basisharz und/oder am Härter ankommen kann. Das oder die Sinteradditiv(e) sind jedoch je nach Nanopartikel und Basisharz mit herkömmlicher und siloxan-basierter Komponente verschieden auszuwählen.

Das oder die Sinteradditiv(e) können auch in beidem, also sowohl in der härtbaren Formulierung als auch im Glimmerband vorliegen.

Nach einer vorteilhaften Ausführungsform ist der Isolierstoff allein so teilentladungsresistent, dass zur Hauptisolierung auf die Glimmerbänder verzichtet werden kann, weil der Verguss aus Isolierstoff ausreichende Isolierung bringt.

Die Verbesserung der Lebensdauer wird durch ein Verschmelzen der Nanopartikel, insbesondere der metalloxidischen Nanopartikel, wie beispielsweise der SiO₂-Partikel beim Vorhandensein einer elektrischen Entladung bewirkt. Dabei entstehen verglaste Bereiche im Isolierstoff, die als Barriereschichten wirken und teilentladungsresistent sind.

Insbesondere kann ein Isolationsmaterial vorgesehen sein, die einzelnen Komponenten in folgenden Gewichtsprozenten umfassend:
0,3 bis 0,7 Gew% einer organischen Phosphorverbindung als Sinteradditiv,
57 bis 63 Gew% eines Glimmers als Barriere bildenden Füllstoffs,
3 bis 15 Gew% Nanopartikel, beispielsweise anorganische Nanopartikel, insbesondere solche auf Quarzbasis,
10 bis 20 Gew% eines anhydridischen Härters,
10 bis 20 Gew% eines herkömmlichen kohlenstoffbasierten Basisharzes, wie eines Epoxidharzes,
0,5 bis 10 eines Siloxans, wie beispielsweise eines epoxidierten Siloxans.

### Beispiel:

0,5 Gew% organische Phosphorverbindung
3,2 Gew% epoxidiertes Siloxan
59,5 Gew% Glimmer
8 Gew% SiO₂-Nanopartikel
16 Gew% MHHPA (anhydridischer Härter)
12,8Gew% Epoxidharz.

Durch die Erfindung wird erstmals ein Isolationsmaterial, also eine Zusammensetzung für eine härtbare Mischung, die einen Isolationsstoff bildet, gegeben, bei dem im Betrieb unter gleichen Bedingungen die Lebensdauer der herkömmlichen Systeme um bis zu das 8-fache übertroffen wird. Dies wird auf die symbiotische Kombination von Substitution des herkömmlichen Epoxidharzes zumindest teilweise durch SiR₂-O-Rückgrat bildende Komponenten zusammen mit anorganischen Nanopartikeln und einem Sinteradditiv, das die Verschmelzung der Nanopartikel in dem Basisharz bewirkt, zurückgeführt.

## Patentansprüche

1. Isolationsmaterial und/oder Imprägnierharz für eine Wickelbandisolierung, zumindest ein Basisharz, einen Härter, zumindest eine nanopartikuläre Füllstofffraktion und Additive umfassend, wobei das Basisharz in polymerem Zustand zumindest zum Teil mit einem -SiR₂-O-Rückgrat vorliegt und zumindest ein Additiv vorgesehen ist, durch das bei elektrischen Teilentladungen eine zumindest teilweise Versinterung der Nanopartikel zu einer Barriereschicht erfolgt.

2. Isolationsmaterial und/oder Imprägnierharz für eine Wickelbandisolierung nach Anspruch 1, wobei ein Sinteradditiv vorgesehen ist, das eine Verglasung der Nanopartikel bewirkt.

3. Isolationsmaterial und/oder Imprägnierharz für eine Wickelbandisolierung nach einem der vorstehenden Ansprüche 1 oder 2, wobei das oder die Sinteradditive ausgewählt sind aus der Gruppe folgender Sinteradditive: Magnesiumoxid (MgO), Calciumcarbonat (CaO₃), Stickstoffverbindung(en), organische Phosphorverbindung(en), Aluminiumnitrid (AlN), Siliziumcarbid (SiC), Titannitrid (TiN), Yttriumoxid (Y₂O₃), Yttrium-Aluminium-Granat (Al₃Y₅O₁₂) , Neodymoxid (Nd₂O₃) und/oder Ceroxid (CeO₂) .

4. Isolationsmaterial und/oder Imprägnierharz für eine Wickelbandisolierung nach einem der vorstehenden Ansprüche, wobei zumindest ein Sinteradditiv eine organische Phosphorverbindung ist.

5. Isolationsmaterial und/oder Imprägnierharz für eine Wickelbandisolierung nach einem der vorstehenden Ansprüche, wobei zumindest eine Fraktion Nanopartikel anorganische Nanopartikel umfasst.

6. Isolationsmaterial und/oder Imprägnierharz für eine Wickelbandisolierung nach einem der vorstehenden Ansprüche, wobei zumindest eine Fraktion anorganischer Nanopartikel Siliziumdioxid-Partikel umfasst.

7. Isolationsmaterial und/oder Imprägnierharz für eine Wickelbandisolierung nach einem der vorstehenden Ansprüche, wobei das Additiv in Partikelgrößen 1 nm bis 50 nm vorliegt.

8. Isolationsmaterial und/oder Imprägnierharz für eine Wickelbandisolierung nach einem der vorstehenden Ansprüche, wobei Nanopartikel im Isolationsmaterial in einer Menge im Bereich von 0,1 bis 50 Vol% enthalten sind.

9. Isolationsmaterial und/oder Imprägnierharz für eine Wickelbandisolierung nach einem der vorstehenden Ansprüche, wobei das oder die Additive bezüglich des Nanopartikelanteils in einer Menge von 0,1 bis 50 Gew% vorliegen.

10. Isolationsmaterial und/oder Imprägnierharz für eine Wickelbandisolierung nach einem der vorstehenden Ansprüche, wobei Nanopartikel mit einem mittleren Durchmesser D₅₀ von 0,1 bis 50nm vorliegen.

11. Isolationsmaterial und/oder Imprägnierharz für eine Wickelbandisolierung nach einem der vorstehenden Ansprüche, wobei das Basisharz bis zu 50 Mol% einer, nach erfolgter Härtung ein SiR₂-O-Rückgrat bildende, Verbindung umfasst.

12. Isolationsmaterial und/oder Imprägnierharz für eine Wickelbandisolierung nach einem der vorstehenden Ansprüche, wobei Nanopartikel in Form von Nano-Glaskügelchen vorgesehen sind.

13. Isolationsmaterial und/oder Imprägnierharz für eine Wickelbandisolierung nach einem der vorstehenden Ansprüche folgende ungefähre Zusammensetzung aufweisend:
0,3 bis 0,7 Gew% einer organischen Phosphorverbindung als Sinteradditiv,
57 bis 63 Gew% eines Glimmers als Barriere bildenden Füllstoffs,
3 bis 15 Gew% Nanopartikel, beispielsweise anorganische Nanopartikel, insbesondere solche auf Siliziumdioxid-Basis,
10 bis 20 Gew% eines anhydridischen Härters,
10 bis 20 Gew% eines herkömmlichen kohlenstoffbasierten Basisharzes, wie eines Epoxidharzes,
0,5 bis 10 eines Siloxans, wie beispielsweise eines epoxidierten Siloxans.

14. Isolationsstoff, erhältlich durch Härtung eines Isolationsmaterials nach einem der vorstehenden Ansprüche 1 bis 13.

15. Isolationssystem, umfassend einen Isolationsstoff nach Anspruch 14.
